# EUROPEAN PATENT APPLICATION

(11) **EP 4 575 560 A1**
(43) Date of publication of application: **25.06.2025**
(21) Application number: 22956741.7
(22) Date of filing: 29.08.2022
(51) Int. Cl.: G01S 7/481, G01S 17/02

(54) **DETECTION APPARATUS AND TERMINAL DEVICE**

(71) Applicant: Shenzhen Yinwang Intelligent Technologies Co., Ltd., Shenzhen, Guangdong 518129 (CN)
(72) Inventor: HSU, Yun Chiang, Shenzhen, Guangdong 518129 (CN); YU, Anliang, Shenzhen, Guangdong 518129 (CN); WANG, Shuai, Shenzhen, Guangdong 518129 (CN); CHEN, Hongfu, Shenzhen, Guangdong 518129 (CN); ZHOU, Yong, Shenzhen, Guangdong 518129 (CN)
(74) Representative: Pfenning, Meinig & Partner mbB
(86) International application number: PCT/CN2022/115570
(87) International publication number: WO 2024/044905

(57) **Abstract**

A detection apparatus and a terminal device are provided, and can be used in fields such as intelligent driving, intelligent robots, and surveying and mapping. The detection apparatus includes a first scanning module, a second scanning module, a first emitting module, and a second emitting module. A first reflective surface of the first scanning module and a second reflective surface of the second scanning module are disposed opposite to each other, and an included angle between the first reflective surface and the second reflective surface is greater than 0° and less than 180°, so that face-to-face cross scanning can be implemented. This can reduce blocking of an emission light cone by a fastening mechanical part or the like. The first emitting module is configured to emit a first light beam. The second emitting module is configured to emit a second light beam. The first reflective surface is configured to: reflect the first light beam to form a first field of view, and reflect a first echo signal to a first receiving module. The first echo signal is obtained by reflecting the first light beam by a target in the first field of view. The second reflective surface is configured to: reflect the second light beam to form a second field of view, and reflect a second echo signal to a second receiving module. The second echo signal is obtained by reflecting the second light beam by a target in the second field of view.

## Description

### TECHNICAL FIELD

This application relates to the field of detection technologies, and in particular, to a detection apparatus and a terminal device.

### BACKGROUND

With development of science and technology, intelligent terminals such as intelligent transportation equipment, intelligent household devices, robots, and vehicles are gradually entering people's daily life. A lidar can sense and detect an ambient environment with high precision, for example, detect a contour of a target, and then identify and track a moving target and identify a static target (for example, a lane line or a signboard) based on sensed environment information. Therefore, the lidar plays an increasingly important role in the intelligent terminal.

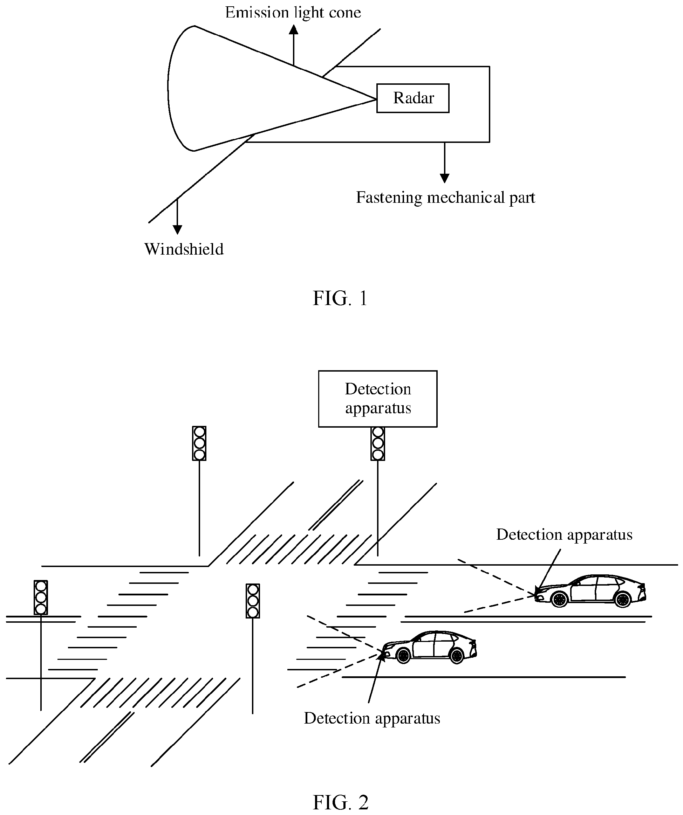

The lidar is installed on the intelligent terminal, and specific space needs to be reserved for the lidar in the intelligent terminal. A size of the reserved space is related to a volume of the lidar and a size of an emission light cone (or referred to as an emergent light cone) of the lidar. Refer to FIG. 1. For example, a radar is installed behind a windshield of a vehicle. The radar is fastened in reserved space by using a fastening mechanical part. A projection area of an emission light cone of the radar on the windshield is covered by the fastening mechanical part, and an area covered by the fastening mechanical part blocks a view of a driver. To minimize impact on the view of the driver, a size of the reserved space may be reduced. Therefore, the fastening mechanical part is designed to be small. Based on this, the emission light cone of the lidar may be blocked by the fastening mechanical part.

In conclusion, how to reduce or avoid, as much as possible, a case in which the emission light cone of the lidar is blocked by the fastening mechanical part is a technical problem to be urgently resolved currently.

### SUMMARY

This application provides a detection apparatus and a terminal device, to reduce or avoid, as much as possible, a case in which an emission light cone of the detection apparatus is blocked by a fastening mechanical part that fastens the detection apparatus, without affecting a field of view of the detection apparatus.

According to a first aspect, this application provides a detection apparatus. The detection apparatus includes a first scanning module, a second scanning module, a first emitting module, and a second emitting module. The first scanning module includes a first reflective surface, the second scanning module includes a second reflective surface, the first reflective surface and the second reflective surface are disposed opposite to each other (or referred to as being disposed face to face), and an included angle between the first reflective surface and the second reflective surface is greater than 0° and less than 180°. In other words, an intersection point of extension lines of the first reflective surface and the second reflective surface is away from a light outlet. The first emitting module is configured to emit a first light beam. The second emitting module is configured to emit a second light beam. The first reflective surface of the first scanning module is configured to: reflect the first light beam to form a first field of view, and reflect a first echo signal to a first receiving module. The first echo signal is obtained by reflecting the first light beam by a target in the first field of view. The second reflective surface of the second scanning module is configured to: reflect the second light beam to form a second field of view and reflect a second echo signal to a second receiving module. The second echo signal is obtained by reflecting the second light beam by a target in the second field of view.

Based on the foregoing solution, the first reflective surface and the second reflective surface are disposed opposite to each other, and the included angle between the first reflective surface and the second reflective surface is greater than 0° and less than 180°, so that face-to-face cross scanning between the first scanning module and the second scanning module can be implemented. Cross scanning may enable an emission light cone of the detection apparatus to present an increasing trend in a second direction (referring to a change trend of a total light cone shown in an elliptical area). Therefore, in a fastening mechanical part configured to fasten the detection apparatus, a small emission light cone of the detection apparatus may be set, so that the emission light cone can be prevented from being blocked by the fastening mechanical part. The emission light cone of the detection apparatus is a total light cone of a light cone formed by reflecting the first light beam by the first reflective surface and a light cone formed by reflecting the second light beam by the second reflective surface. Further, a field of view of the detection apparatus is a sum of the first field of view and the second field of view. In this way, the emission light cone of the detection apparatus may be prevented, as much as possible, from being blocked by the fastening mechanical part, without reducing or increasing the field of view of the detection apparatus.

In a possible implementation, the first light beam reflected by the first reflective surface and the second light beam reflected by the second reflective surface are emitted opposite to each other.

The first light beam and the second light beam are emitted opposite to each other, to implement cross scanning of the first light beam and the second light beam.

In a possible implementation, the first field of view and the second field of view partially overlap.

The first field of view and the second field of view partially overlap, so that scanning performance of an overlapping part can be enhanced. A divergence angle and the like at which the detection apparatus emits light in a fastening mechanical part are reduced through overlapping, to avoid blocking of the emission light cone of the detection apparatus.

In a possible implementation, a light spot of the first light beam and a light spot of the second light beam in an overlapping field of view are staggered.

The light spot of the first light beam and the light spot of the second light beam in the overlapping field of view are staggered, so that point cloud density of the overlapping field of view can be increased, and an angular resolution in the overlapping field of view can be increased.

In a possible implementation, a spacing L between the first scanning module and the second scanning module and a length M of a housing of the detection apparatus in a first direction meet 0.3≤L/W<1, and the spacing L is a distance between a center of the first reflective surface and a center of the second reflective surface in the first direction.

A larger value of L indicates a longer distance between an intersection point (referred to as a viewpoint) of an outer envelope of the first field of view and an outer envelope of the second field of view or an intersection point (referred to as a viewpoint) of extension lines and the scanning module, that is, a larger value of L indicates a larger viewpoint forward amount and a smaller emission light cone of the detection apparatus. Therefore, L is set to be close to W, to reduce or avoid, as much as possible, blocking of the emission light cone of the detection apparatus.

In a possible implementation, an included angle θ₁ between the first light beam and a normal line of the first reflective surface meets the following relationship: 0°<θ₁≤50, and/or an included angle θ₂ between the second light beam and a normal line of the second reflective surface meets the following relationship: 0°<θ₂≤50°.

The included angle θ₁ between the first light beam and the normal line of the first reflective surface is set to meet the following relationship: 0°<θ₁≤50. This ensures that a projection area of the first light beam on the first reflective surface is small, so that a diameter of the first light beam may be large. This helps increase an effective amount of incident light of the first light beam in a system. The included angle θ₂ between the second light beam and the normal line of the second reflective surface is set to meet the following relationship: 0°<θ₂<50°. This ensures that a projection area of the second light beam on the second reflective surface is small, so that a diameter of the second light beam is large. This helps increase an effective amount of incident light of the second light beam in the system.

In a possible implementation, the first light beam and the second light beam are pulse light beams. The first emitting module includes a first light source assembly, and the second emitting module includes a second light source assembly. Start time at which the first light source assembly emits the first light beam is different from start time at which the second light source assembly emits the second light beam.

The start time at which the first light source assembly emits the first light beam is designed to be different from the start time at which the second light source assembly emits the second light beam, to avoid crosstalk between the first light beam and the second light beam as much as possible.

In a possible implementation, at least one of the first light beam and the second light beam is a continuous light beam.

In a possible implementation, a wavelength of the first light beam is the same as or different from a wavelength of the second light beam.

In a possible implementation, the first emitting module includes a first emitting optical assembly, and the first emitting optical assembly includes at least one first lens. A projection Dt₁ of a 1^{st} first lens in the first direction and a projection R₁ of the first reflective surface in the first direction meet 0<Dt₁≤R₁. The 1^{st} first lens is a last lens through which the first light beam passes through the first emitting optical assembly.

Through setting of 0<Dt₁≤R₁, it can be ensured that the first light beam is completely reflected by the first reflective surface of the first scanning module, so that a large first field of view can be formed.

In a possible implementation, the second emitting module includes a second emitting optical assembly, and the second emitting optical assembly includes at least one second lens. A projection Dt₂ of a 1^{st} second lens in the first direction and a projection R₂ of the second reflective surface in the first direction meet 0<Dt₂≤R₂. The 1^{st} second lens is a last lens through which the second light beam passes through the second emitting optical assembly.

Through setting of Dt₂≤R₂, it can be ensured that the second light beam is completely reflected by the second reflective surface of the second scanning module, so that a large second field of view can be formed.

In a possible implementation, the detection apparatus further includes a first receiving module and a second receiving module. The first receiving module is configured to receive the first echo signal, and the second receiving module is configured to receive the second echo signal.

Further, optionally, the first receiving module includes a first receiving optical assembly, and the first receiving optical assembly includes at least one third lens. A projection Dr₁ of a 1^{st} third lens in the first direction and the projection R₁ of the first reflective surface in the first direction meet 0<Dr₁≤R₁. The 1^{st} third lens is a 1^{st} lens through which the first echo signal passes through the first receiving optical assembly.

Through setting of Dr₁≤R₁, it can be ensured that the first light beam is completely reflected by the first reflective surface of the first scanning module, so that a large first field of view can be formed.

In a possible implementation, the projection Dt₁ of the 1^{st} first lens in the first direction and a projection Dr₁ of a 1^{st} third lens in the first direction meet 0<Dt₁/Dr₁≤1.

Through setting of 0<Dt₁/Dr₁≤1, it can be ensured that an effective area in which the first receiving optical assembly receives the first echo signal is large, so that a loss of the first echo signal can be reduced as much as possible.

In a possible implementation, the second receiving module includes a second receiving optical assembly, and the second receiving optical assembly includes at least one fourth lens. A projection Dr₂ of a 1^{st} fourth lens in the first direction and the projection R₂ of the second reflective surface in the first direction meet 0<Dr₂≤R₂. The 1^{st} fourth lens is a 1^{st} lens through which the second echo signal passes through the second receiving optical assembly.

Through setting of Dr₂≤R₂, it can be ensured that the second light beam is completely reflected by the second reflective surface of the second scanning module, so that a large second field of view can be formed.

In a possible implementation, the projection Dt₂ of the 1^{st} second lens in the first direction and a projection Dr₂ of a 1^{st} fourth lens in the first direction meet 0<Dt₂/Dr₂≤1.

Through setting of 0<Dt₂/Dr₂≤1, it can be ensured that an effective area in which the second receiving optical assembly receives the second echo signal is large, so that a loss of the second echo signal can be reduced as much as possible.

In a possible implementation, the first lens, the second lens, the third lens, and the fourth lens include any one of the following: a spherical lens, an aspheric lens, or a cylindrical lens.

In a possible implementation, the first scanning module includes a first rotating shaft and a second rotating shaft, and the second rotating shaft is perpendicular to the first rotating shaft.

By using the first scanning module that can implement two-dimensional scanning, a size of the emission light cone of the detection apparatus can be further reduced, to prevent, as much as possible, the emission light cone of the detection apparatus from being blocked.

In a possible implementation, the first rotating shaft is parallel to the first reflective surface.

The first rotating shaft is set to be parallel to the first reflective surface. This helps reduce a space size required by the first scanning module, and further helps miniaturize the detection apparatus.

In a possible implementation, the first scanning module performs non-uniform scanning around the first rotating shaft; and/or the first scanning module performs non-uniform scanning around the second rotating shaft.

An angular resolution of the detection apparatus can be flexibly adjusted by controlling a scanning speed of the first scanning module.

In a possible implementation, the second scanning module includes a third rotating shaft and a fourth rotating shaft, and the fourth rotating shaft is perpendicular to the third rotating shaft.

By using the second scanning module that can implement two-dimensional scanning, a size of the emission light cone of the detection apparatus can be further reduced, to prevent, as much as possible, the emission light cone of the detection apparatus from being blocked.

In a possible implementation, the third rotating shaft is parallel to the second reflective surface.

The second rotating shaft is set to be parallel to the second reflective surface. This helps reduce a space size required by the second scanning module, and further helps miniaturize the detection apparatus.

In a possible implementation, the second scanning module performs non-uniform scanning around the third rotating shaft; and/or the second scanning module performs non-uniform scanning around the fourth rotating shaft
An angular resolution of the detection apparatus can be flexibly adjusted by controlling a scanning speed of the second scanning module.

In a possible implementation, non-uniform scanning includes: a scanning speed in a field of view of interest is less than a scanning speed in a field of view of uninterest. The first field of view includes the field of view of interest and the field of view of uninterest, and/or the second field of view includes the field of view of interest and the field of view of uninterest.

A slower scanning speed indicates a smaller interval between adjacent light spots and a higher angular resolution of the detection apparatus. A scanning speed in the field of view of interest is set to be lower than a scanning speed in the field of view of uninterest, so that an angular resolution of a detection region may be higher than an angular resolution of a non-region of interest. In other words, an angular resolution of a region of interest of the detecting apparatus can be increased.

In a possible implementation, a first scanning angle at which the first scanning module rotates around the first rotating shaft is less than or greater than a first angle interval, and the first angle interval is an included angle between any two adjacent first light beams.

The first scanning angle is set to be less than or greater than the first angle interval, so that the detection apparatus can have small angular resolution at a large first scanning angle.

In a possible implementation, the first scanning angle α₁ and the first angle interval φ₁ meet 0.5≤α₁/φ₁<1 or 1<α₁/φ₁≤1.5.

The first scanning angle α₁ and the first angle interval φ₁ are set to meet 0.5≤α₁/φ₁<1 or 1<α₁/φ₁≤1.5. This helps further increase the angular resolution of the detection apparatus.

In a possible implementation, a second scanning angle at which the second scanning module rotates around the third rotating shaft is less than or greater than a second angle interval, and the second angle interval is an included angle between any two adjacent second light beams.

The second scanning angle is set to be less than or greater than the second angle interval, so that the detection apparatus can have small angular resolution at a large second scanning angle.

In a possible implementation, the second scanning angle α₂ and the second angle interval φ₂ meet 0.5≤α₁/φ₁<1 or 1<α₁/φ₁≤1.5.

The second scanning angle α₂ and the second angle interval φ₂ are set to meet 0.5≤α₁/φ₁<1 or 1<α₂/φ₂≤1.5. This helps further increase the angular resolution of the detection apparatus.

In a possible implementation, the detection apparatus further includes a first reflection module and/or a second reflection module. The first reflection module is configured to: change a propagation optical path of the first light beam, and propagate the first light beam to the first scanning module; and/or the second reflection module is configured to: change a propagation optical path of the second light beam, and propagate the second light beam to the second scanning module.

A propagation optical path of the first light beam is changed by using the first reflection module, and/or a propagation optical path of the second light beam is changed by using the second reflection module. This helps miniaturize the detection apparatus.

In a possible implementation, the first reflection module includes at least one first reflector; and/or the second reflection module includes at least one second reflector.

In a possible implementation, the detection apparatus further includes a third emitting module and a fourth emitting module, and the third emitting module is configured to emit a third light beam. The fourth emitting module is configured to emit a fourth light beam. The first reflective surface of the first scanning module is further configured to: reflect the third light beam to a third field of view, and reflect a third echo signal to the third receiving module, where the third echo signal is obtained by reflecting the third light beam by a target in the third field of view. The second reflective surface of the second scanning module is further configured to: reflect the fourth light beam to a fourth field of view, and reflect a fourth echo signal to a fourth receiving module, where the fourth echo signal is obtained by reflecting the fourth light beam by a target in the fourth field of view.

The four emitting modules help increase a range of a field of view of the detection apparatus.

In a possible implementation, the third emitting module is adjacent to the first emitting module, and the fourth emitting module is adjacent to the second emitting module.

In a possible implementation, the first field of view and the third field of view are joined or partially overlapped; and/or the second field of view and the fourth field of view are joined or partially overlapped; and/or the first field of view and the second field of view are joined or partially overlapped.

Different fields of view are set to be partially overlapped, so that scanning performance of an overlapping part can be enhanced. A divergence angle and the like at which a detection apparatus emits light in a fastening mechanical part can be reduced through overlapping, to avoid blocking of an emission light cone of the detection apparatus. By designing different field of view to connect to each other, it is helpful to increase a range of a field of view of the detection apparatus.

In a possible implementation, a light spot of the first light beam and a light spot of the third light beam in an overlapping field of view are staggered; a light spot of the second light beam and a light spot of the fourth light beam in an overlapping field of view are staggered; and/or a light spot of the first light beam and a light spot of the second light beam in an overlapping field of view are staggered.

Light spots of different light beams are set to be staggered in an overlapping field of view, so that an angular resolution in the overlapping field of view is increased.

In a possible implementation, the detection apparatus further includes a third receiving module and a fourth receiving module, the third receiving module is configured to receive the third echo signal, and the fourth receiving module is configured to receive the fourth echo signal.

According to a second aspect, this application provides a terminal device. The terminal device includes a control apparatus and the detection apparatus according to any one of the first aspect or the possible embodiments of the first aspect, and the control apparatus is configured to control the detection apparatus to perform detection.

According to a third aspect, this application provides a detection apparatus. The detection apparatus includes a first scanning module, a second scanning module, a first emitting module, and a second emitting module. The first scanning module includes a first reflective surface, the second scanning module includes a second reflective surface, the first emitting module is configured to emit a first light beam, and the second emitting module is configured to emit a second light beam. The first reflective surface of the first scanning module is configured to: reflect the first light beam to form a first field of view, and reflect a first echo signal to the first receiving module, where the first echo signal is obtained by reflecting the first light beam by a target in the first field of view. The second reflective surface of the second scanning module is configured to: reflect the second light beam to form a second field of view and reflect a second echo signal to a second receiving module. The second echo signal is obtained by reflecting the second light beam by a target in the second field of view. An angle between a first edge (or referred to as a first edge of an outer envelope of the first field of view) of the first field of view and a first frame of a fastening mechanical part is less than a first threshold, and/or an angle between a second edge (or referred to as a second edge of an outer envelope of the second field of view) of the second field of view and a second frame of a fastening mechanical part is less than a second threshold. The fastening mechanical part is configured to fasten the detection apparatus.

In a possible implementation, the angle between the first edge of the first field of view and the first frame of the fastening mechanical part is equal to 0°, and/or the angle between the second edge of the second field of view and the second frame of the fastening mechanical part is equal to 0°.

In a possible implementation, the first reflective surface and the second reflective surface are disposed opposite to each other, and an included angle between the first reflective surface and the second reflective surface is greater than 0° and less than 180°.

In a possible implementation, the first light beam reflected by the first reflective surface and the second light beam reflected by the second reflective surface are emitted opposite to each other.

In a possible implementation, the first field of view and the second field of view partially overlap.

In a possible implementation, a light spot of the first light beam and a light spot of the second light beam in an overlapping field of view are staggered.

In a possible implementation, a spacing L between the first scanning module and the second scanning module and a length M of a housing of the detection apparatus in a first direction meet 0.3≤L/W<1, and the spacing L is a distance between a center of the first reflective surface and a center of the second reflective surface in the first direction.

In a possible implementation, an included angle θ₁ between the first light beam and a normal line of the first reflective surface meets the following relationship: 0°<θ₁≤50, and/or an included angle θ₂ between the second light beam and a normal line of the second reflective surface meets the following relationship: 0°<θ₂≤50°.

In a possible implementation, the first light beam and the second light beam are pulse light beams. The first emitting module includes a first light source assembly, and the second emitting module includes a second light source assembly. Start time at which the first light source assembly emits the first light beam is different from start time at which the second light source assembly emits the second light beam.

In a possible implementation, at least one of the first light beam and the second light beam is a continuous light beam.

In a possible implementation, a wavelength of the first light beam is the same as or different from a wavelength of the second light beam.

In a possible implementation, the first emitting module includes a first emitting optical assembly, and the first emitting optical assembly includes at least one first lens. A projection Dt₁ of a 1^{st} first lens in the first direction and a projection R₁ of the first reflective surface in the first direction meet 0<Dt₁≤R₁. The 1^{st} first lens is a last lens through which the first light beam passes through the first emitting optical assembly.

In a possible implementation, the second emitting module includes a second emitting optical assembly, and the second emitting optical assembly includes at least one second lens. A projection Dt₂ of a 1^{st} second lens in the first direction and a projection R₂ of the second reflective surface in the first direction meet 0<Dt₂<R₂. The 1^{st} second lens is a last lens through which the second light beam passes through the second emitting optical assembly.

In a possible implementation, the detection apparatus further includes a first receiving module and a second receiving module. The first receiving module is configured to receive the first echo signal, and the second receiving module is configured to receive the second echo signal.

Further, optionally, the first receiving module includes a first receiving optical assembly, and the first receiving optical assembly includes at least one third lens. A projection Dr₁ of a 1^{st} third lens in the first direction and the projection R₁ of the first reflective surface in the first direction meet 0<Dr₁≤R₁. The 1^{st} third lens is a 1^{st} lens through which the first echo signal passes through the first receiving optical assembly.

In a possible implementation, the projection Dt₁ of the 1^{st} first lens in the first direction and a projection Dr₁ of a 1^{st} third lens in the first direction meet 0<Dt₁/Dr₁≤1.

In a possible implementation, the second receiving module includes a second receiving optical assembly, and the second receiving optical assembly includes at least one fourth lens. A projection Dr₂ of a 1^{st} fourth lens in the first direction and the projection R₂ of the second reflective surface in the first direction meet 0<Dr₂≤R₂. The 1^{st} fourth lens is a 1^{st} lens through which the second echo signal passes through the second receiving optical assembly.

In a possible implementation, the projection Dt₂ of the 1^{st} second lens in the first direction and a projection Dr₂ of a 1^{st} fourth lens in the first direction meet 0<Dt₂/Dr₂≤1.

In a possible implementation, the first lens, the second lens, the third lens, and the fourth lens include any one of the following: a spherical lens, an aspheric lens, or a cylindrical lens.

In a possible implementation, the first scanning module includes a first rotating shaft and a second rotating shaft, and the second rotating shaft is perpendicular to the first rotating shaft.

In a possible implementation, the first rotating shaft is parallel to the first reflective surface.

In a possible implementation, the first scanning module performs non-uniform scanning around the first rotating shaft; and/or the first scanning module performs non-uniform scanning around the second rotating shaft.

In a possible implementation, the second scanning module includes a third rotating shaft and a fourth rotating shaft, and the fourth rotating shaft is perpendicular to the third rotating shaft.

In a possible implementation, the third rotating shaft is parallel to the second reflective surface.

In a possible implementation, the second scanning module performs non-uniform scanning around the third rotating shaft; and/or the second scanning module performs non-uniform scanning around the fourth rotating shaft

In a possible implementation, non-uniform scanning includes: a scanning speed in a field of view of interest is less than a scanning speed in a field of view of uninterest. The first field of view includes the field of view of interest and the field of view of uninterest, and/or the second field of view includes the field of view of interest and the field of view of uninterest.

In a possible implementation, a first scanning angle at which the first scanning module rotates around the first rotating shaft is less than or greater than a first angle interval, and the first angle interval is an included angle between any two adjacent first light beams.

In a possible implementation, the first scanning angle α₁ and the first angle interval φ₁ meet 0.5≤α₁/φ₁<1 or 1<α₁/φ₁≤1.5.

In a possible implementation, a second scanning angle at which the second scanning module rotates around the third rotating shaft is less than or greater than a second angle interval, and the second angle interval is an included angle between any two adjacent second light beams.

In a possible implementation, the second scanning angle α₂ and the second angle interval φ₂ meet 0.5≤α₁/φ₁<1 or 1<α₁/φ₁≤1.5.

In a possible implementation, the apparatus further includes a first reflection module and/or a second reflection module. The first reflection module is configured to: change a propagation optical path of the first light beam, and propagate the first light beam to the first scanning module; and/or the second reflection module is configured to: change a propagation optical path of the second light beam, and propagate the second light beam to the second scanning module.

In a possible implementation, the first reflection module includes at least one first reflector; and/or the second reflection module includes at least one second reflector.

In a possible implementation, the detection apparatus further includes a third emitting module and a fourth emitting module, and the third emitting module is configured to emit a third light beam. The fourth emitting module is configured to emit a fourth light beam. The first reflective surface of the first scanning module is further configured to: reflect the third light beam to a third field of view, and reflect a third echo signal to the third receiving module, where the third echo signal is obtained by reflecting the third light beam by a target in the third field of view. The second reflective surface of the second scanning module is further configured to: reflect the fourth light beam to a fourth field of view, and reflect a fourth echo signal to a fourth receiving module, where the fourth echo signal is obtained by reflecting the fourth light beam by a target in the fourth field of view.

In a possible implementation, the third emitting module is adjacent to the first emitting module, and the fourth emitting module is adjacent to the second emitting module.

In a possible implementation, the first field of view and the third field of view are joined or partially overlapped; and/or the second field of view and the fourth field of view are joined or partially overlapped; and/or the first field of view and the second field of view are joined or partially overlapped.

In a possible implementation, a light spot of the first light beam and a light spot of the third light beam in an overlapping field of view are staggered; a light spot of the second light beam and a light spot of the fourth light beam in an overlapping field of view are staggered; and/or a light spot of the first light beam and a light spot of the second light beam in an overlapping field of view are staggered.

In a possible implementation, the detection apparatus further includes a third receiving module and a fourth receiving module, the third receiving module is configured to receive the third echo signal, and the fourth receiving module is configured to receive the fourth echo signal.

For technical effects that can be achieved in the second aspect or the third aspect, refer to descriptions of beneficial effects in the first aspect. Details are not described herein again.

### BRIEF DESCRIPTION OF DRAWINGS

FIG. 1 is a diagram of a structure in which a radar is installed in a windshield according to this application;
FIG. 2 is a diagram of a possible application scenario according to this application;
FIG. 3 is a diagram of a structure of a detection apparatus according to this application;
FIG. 4 is a diagram of an emission light cone of a detection apparatus according to this application;
FIG. 5 is a diagram of distribution of first light beams emitted by a first emitting module according to this application;
FIG. 6 is a diagram of a pulse time sequence of emitting a first light beam by a first light source assembly and a pulse time sequence of emitting a second light beam by a second light source assembly according to this application;
FIG. 7 is a diagram in which a second light beam is a continuous light beam according to this application;
FIG. 8a is a diagram of a periodic triangular wave signal according to this application;
FIG. 8b is a diagram of a periodic sawtooth wave signal according to this application;
FIG. 9 is a diagram of a structure of a first scanning module according to this application;
FIG. 10a is a diagram of a light spot obtained by reflecting a first light beam by a first reflective surface of a first scanning module according to this application;
FIG. 10b is a diagram of a light spot obtained by reflecting a first light beam by a first reflective surface of a first scanning module according to this application;
FIG. 11a is a diagram of energy distribution of a first light beam in angular space in a first direction according to this application;
FIG. 11b is a diagram of energy distribution of a first light beam in angular space in a second direction according to this application;
FIG. 11c is a diagram of distribution of light spots of a first echo signal according to this application;
FIG. 12 is a diagram of non-uniform scanning according to this application;
FIG. 13a is a diagram of distribution of light spots forming a first field of view and a second field of view according to this application;
FIG. 13b is another diagram of distribution of light spots forming a first field of view and a second field of view according to this application;
FIG. 14a is a diagram of a structure of a lidar according to this application; and
FIG. 14b is a diagram of a structure of another lidar according to this application.

### DESCRIPTION OF EMBODIMENTS

The following describes in detail embodiments of this application with reference to accompanying drawings.

A detection apparatus in this application may be installed in a vehicle, and may be specifically installed at each location of the vehicle. For example, the detection apparatus may be installed at any one or more locations such as on a head bumper of the vehicle, around a vehicle light, around a rear view mirror, behind a windshield, or on the top of the vehicle, to capture information about an ambient environment of the vehicle. When the detection apparatus is installed behind the windshield, there is a low requirement on a risk of no crushed stone collision, a field of view (field of view, FOV) can face the middle, and an appearance of the vehicle is not affected. In addition, a front windshield has functions of window heating and fog removing, and wiper cleaning. The detection apparatus may include, for example, but is not limited to, a lidar.

Refer to FIG. 2. For example, a detection apparatus is installed on a head bumper of a vehicle. A working principle of the detection apparatus is as follows: The detection apparatus emits a light beam to a detection field of view. If a target (for example, another surrounding vehicle, pedestrian, or obstacle) exists in the detection field of view, because the target has a specific reflectivity and/or scattering rate, the target may reflect and/or scatter the received light beam back to the detection apparatus (a reflected light beam may be referred to as an echo signal), and the detection apparatus determines association information of the target based on the echo signal. Specifically, the detection apparatus may obtain a longitude and a latitude, a speed, an orientation, or association information (for example, a distance of the target, a speed of the target, and/or a posture of the target) of the target in a specific range of the vehicle in real time or periodically. Further, optionally, the detection apparatus may send the obtained information to a control apparatus or the like in the vehicle, so that the control apparatus performs route planning, braking, starting, or the like for the vehicle based on the obtained information. For example, a location of the vehicle may be determined by using the longitude and latitude, or a traveling direction and a destination of the vehicle in a future period of time are determined by using the speed and the orientation, or a quantity and density of obstacles around the vehicle are determined by using distances from the surrounding objects. Further, optionally, assisted driving, autonomous driving, or the like of the vehicle may be implemented with reference to a function of an advanced driving assistant system (advanced driving assistant system, ADAS).

It should be understood that the foregoing application scenario is merely an example. The detection apparatus provided in this application may be further used in another possible scenario, but is not limited to be used in the scenario shown in the foregoing example. For example, the detection apparatus may alternatively be installed on an uncrewed aerial vehicle and serve as an airborne detection apparatus. For another example, the detection apparatus may alternatively be installed on a road side unit (road side unit, RSU) and serve as a road side traffic detection apparatus, to implement intelligent vehicle-road cooperative communication and the like. For another example, the detection apparatus may alternatively be installed on a robot. For another example, the detection apparatus may alternatively be installed on an automated guided vehicle (automated guided vehicle, AGV). The AGV is a transport vehicle equipped with an automatic navigation apparatus like an electromagnetic or optical navigation apparatus, capable of traveling along a specified navigation path, and having security protection and various transferring and loading functions. Details are not listed herein one by one.

It should be noted that application scenarios described in this application are intended to describe the technical solutions in this application more clearly, but are not intended to limit the technical solutions provided in this application. A person of ordinary skill in the art may know that as a new scenario emerges, the technical solutions provided in this application are also applicable to a similar technical problem.

For example, the foregoing application scenario may be applied to the field of autonomous driving, assisted driving, intelligent driving, connected vehicles, security monitoring, remote interaction, artificial intelligence (for example, self-driving or robots), surveying and mapping (for example, three-dimensional drawing), or the like.

With reference to FIG. 1, if an emission light cone of the detection apparatus is directly reduced, a field of view of the lidar is also reduced.

In view of the foregoing problem, this application provides a detection apparatus. The detection apparatus can reduce, by using at least two scanning modules and at least two emitting modules, an emission light cone of the detection apparatus without affecting a field of view of the detection apparatus, to reduce or avoid blocking of the emission light cone of the detection apparatus.

Based on the foregoing content, the following specifically describes the detection apparatus provided in this application with reference to the accompanying drawings.

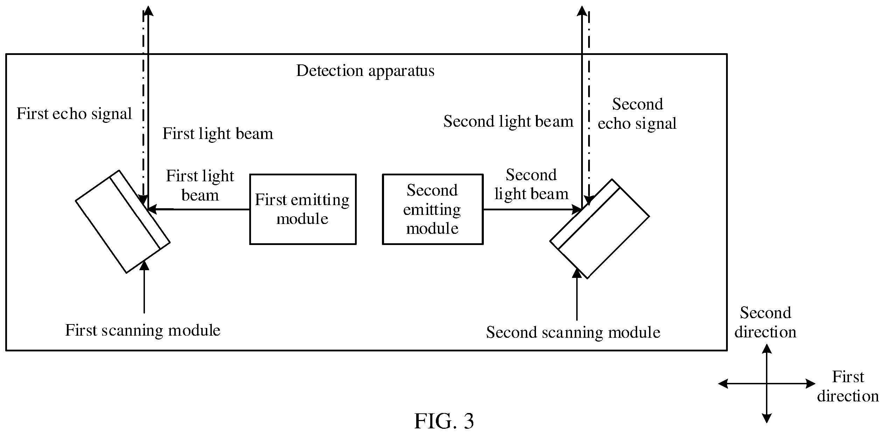

FIG. 3 is a diagram of a structure of a detection apparatus according to this application. The detection apparatus may include a first scanning module, a second scanning module, a first emitting module, and a second emitting module. The first scanning module includes a first reflective surface, and the second scanning module includes a second reflective surface. The first reflective surface and the second reflective surface are disposed opposite to each other (or referred to as being disposed face to face), and an included angle between the first reflective surface and the second reflective surface is greater than 0° and less than 180°. It may also be understood as that an intersection point of extension lines of the first reflective surface and the second reflective surface is far away from a light outlet. The first emitting module is configured to emit a first light beam. The second emitting module is configured to emit a second light beam. The first reflective surface of the first scanning module is configured to: reflect the first light beam to form a first field of view, and reflect a first echo signal to a first receiving module. The first echo signal is obtained by reflecting the first light beam by a target in the first field of view. The second reflective surface of the second scanning module is configured to: reflect the second light beam to form a second field of view, and reflect a second echo signal to a second receiving module. The second echo signal is obtained by reflecting the second light beam by a target in the second field of view. Further, the first scanning module and the second scanning module are arranged in a first direction. For example, in the first direction, the first scanning module is located on the left side, and the second scanning module is located on the right side. The first field of view formed by reflecting the first light beam by the first reflective surface is a right-side field of view, and the second field of view formed by reflecting the second light beam by the second reflective surface is a left-side field of view. In other words, the first field of view faces the second scanning module, and the second field of view faces the first scanning module.

In a possible implementation, the first light beam reflected by the first reflective surface and the second light beam reflected by the second reflective surface are emitted opposite to each other. It may also be understood as that, the first light beam reflected by the first reflective surface and the second light beam reflected by the second reflective surface are emitted crosswise, in other words, an included angle that is between the first light beam reflected by the first reflective surface and the second light beam reflected by the second reflective surface and that is close to the light outlet is greater than 0° and less than 180°.

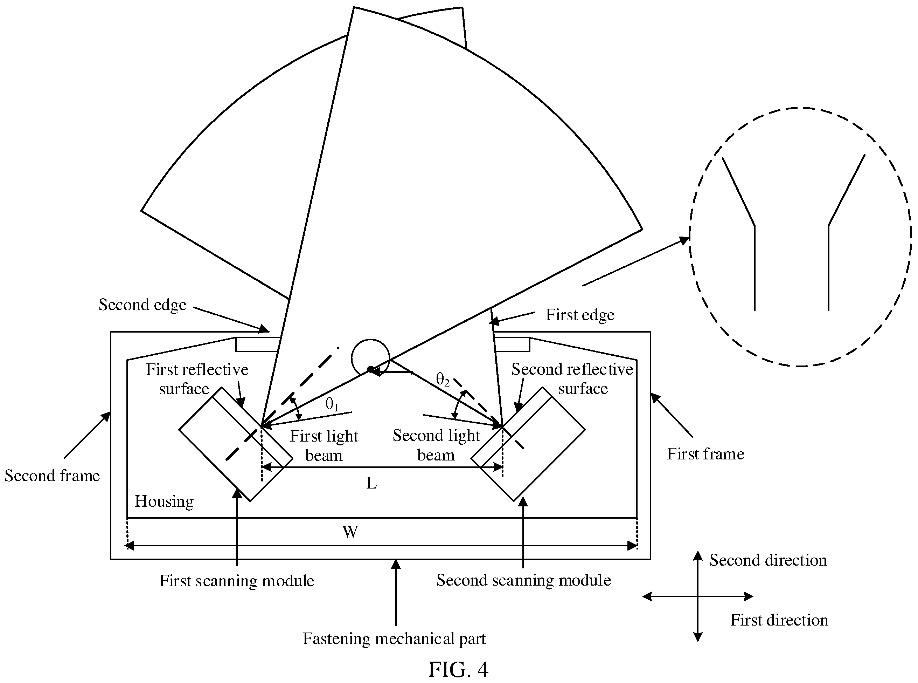

Based on the foregoing detection apparatus, the first reflective surface and the second reflective surface are disposed opposite to each other, and the included angle between the first reflective surface and the second reflective surface is greater than 0° and less than 180°, so that face-to-face cross scanning (or referred to as face-to-face scanning) between the first scanning module and the second scanning module can be implemented. Cross scanning may enable an emission light cone of the detection apparatus to present an increasing trend in a second direction (referring to a change trend of a total light cone shown in an elliptical area). Refer to FIG. 4. Therefore, in a fastening mechanical part configured to fasten the detection apparatus, a small emission light cone of the detection apparatus may be set, so that the emission light cone of the detection apparatus may be prevented, as much as possible, from being blocked by the fastening mechanical part. Specifically, an included angle between a first edge (or referred to as a first edge of an outer envelope of the first field of view) of the first field of view and a first frame of the fastening mechanical part is less than a first threshold, and/or an included angle between a second edge (or referred to as a second edge of an outer envelope of the second field of view) of the second field of view and a second frame of the fastening mechanical part is less than a second threshold. For example, the angle between the first edge of the first field of view and the first frame of the fastening mechanical part is equal to 0°, and/or the angle between the second edge of the second field of view and the second frame of the fastening mechanical part is equal to 0°. In this way, the emission light cone can be prevented from being blocked by the fastening mechanical part. The emission light cone of the detection apparatus is a total light cone of a light cone formed by reflecting the first light beam by the first reflective surface and a light cone formed by reflecting the second light beam by the second reflective surface. Further, a field of view of the detection apparatus is a sum of the first field of view and the second field of view. In this way, the emission light cone of the detection apparatus may be prevented, as much as possible, from being blocked by the fastening mechanical part without affecting or increasing the field of view of the detection apparatus. It should be understood that a receive light cone is usually the same as the emission light cone.

The following separately describes functional modules and structures shown in FIG. 3, to provide examples of specific implementation solutions.

### 1. Emitting module

In a possible implementation, the detection apparatus includes the first emitting module and the second emitting module. The first emitting module is configured to emit the first light beam. Further, the first emitting module is configured to emit N first light beams, where N is an integer greater than 1. The second emitting module is configured to emit a second light beam. Further, the second emitting module is configured to emit M second light beams, where M is an integer greater than 1. It should be noted that N and M may be the same, or may be different. This is not limited in this application.

An example in which the first emitting module emits N first light beams is used for description. The N first light beams are in one-dimensional distribution in the second direction. Fields of view of the N first light beams are respectively w₁±γ₁, ..., wᵢ±γᵢ, wᵢ₊₁±γᵢ₊₁..., w_{N}±γ_{N}, where wᵢ indicates a center angle value of the first light beam, and γᵢ indicates an angle range of the first light beam. It should be noted that γ₁, γ₂, ..., and γ_{N} may be the same, or may be different. This is not limited in this application. In addition, the N first light beams may be uniformly distributed, or may be non-uniformly distributed. This is not limited in this application either. Further, optionally, an interval between center angles of two adjacent first light beams is referred to as a first angle interval φ₁, where φ₁=|wᵢ-wᵢ₊₁|.

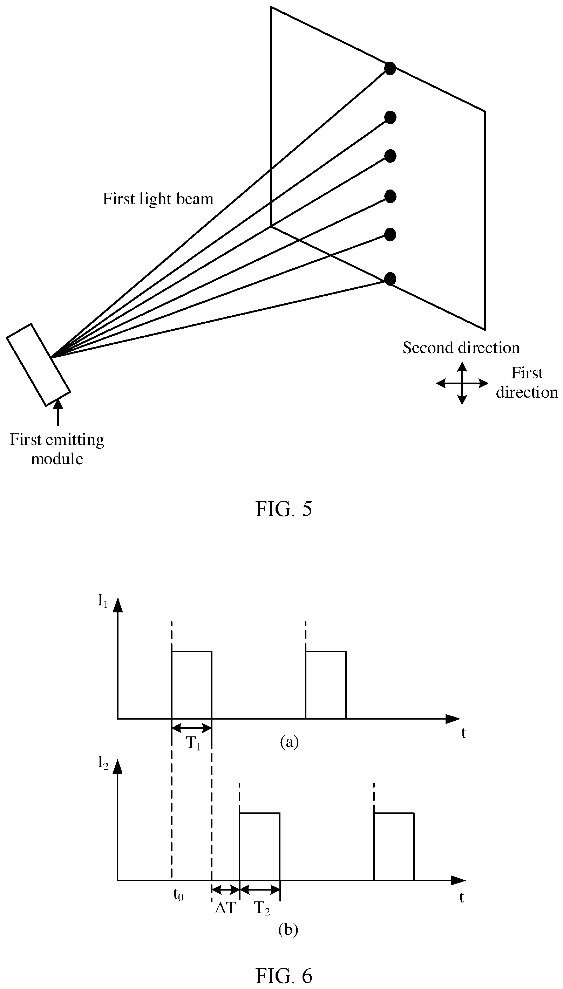

Refer to FIG. 5. For example, N=6. The first emitting module is configured to emit six first light beams, which are sequentially a first light beam 1, a first light beam 2, a first light beam 3, a first light beam 4, a first light beam 5, and a first light beam 6 from top to bottom. Fields of view of the six first light beams in the second direction are respectively w₁±γ₁, w₂±γ₂, w₃±γ₃, w₄±γ₄, w₅±γ₅, and w₆±γ₆. Herein, w₁ indicates a center angle value of the first light beam 1, and ±γ₁ indicates a range of the field of view of the first light beam 1; and w₂ indicates a center angle value of the first light beam 2, and ±γ₂ indicates a range of the field of view of the first light beam 2. By analogy, w₆ indicates a center angle value of the first light beam 6, and ±γ₆ indicates a range of the field of view of the first light beam 6. It should be noted that FIG. 5 is described by using an example in which the center angle values of the six first light beams are uniformly distributed and γ₁, γ₂, γ₃, γ₄, γ₅, and γ₆ are the same.

The following describes the first light beam and the second light beam in different cases based on types of the first light beam and the second light beam.

Case 1: Both the first light beam and the second light beam are pulse light beams.

In a possible implementation, start time at which a first light source assembly emits the first light beam is different from start time at which a second light source assembly emits the second light beam. It may also be understood as that a pulse time sequence of emitting the first light beam by the first light source assembly and a pulse time sequence of emitting the second light beam by the second light source assembly are staggered to an extent. Therefore, crosstalk between the first light beam and the second light beam can be avoided.

Refer to FIG. 6. (a) in FIG. 6 shows the pulse time sequence of emitting the first light beam by the first light source assembly, and (b) in FIG. 6 shows the pulse time sequence of emitting the second light beam by the second light source assembly. The start time at which the first light source assembly emits the first light beam is t₀, and a pulse interval at which the first light source assembly emits the first light beam is T₁. The start time at which the second light source assembly emits the second light beam is t₀+ΔT+T₁, and a pulse interval at which the second light source assembly emits the second light beam is T₂. It should be noted that ΔT may be 0. In addition, T₁ and T₂ may be the same or may be different. This is not limited in this application. For determining a distance of a target based on a pulse light beam, refer to the following descriptions of Implementation 1. Details are not described herein.

Case 2: At least one of the first light beam and the second light beam is a continuous light beam.

For example, the first light beam is a pulse light beam, and the second light beam is a continuous light beam. For another example, both the first light beam and the second light beam are continuous light beams. For another example, the first light beam is a continuous light beam, and the second light beam is a pulse light beam.

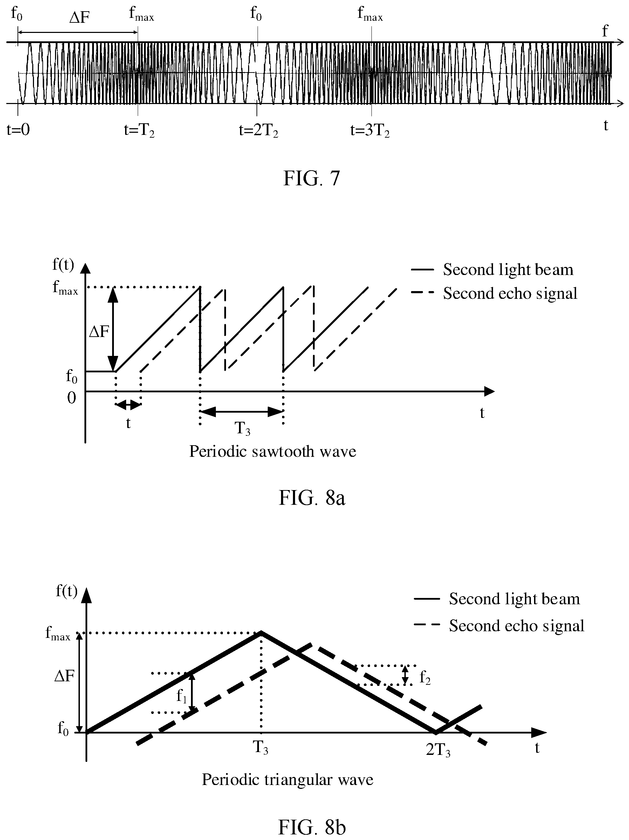

FIG. 7 is a diagram in which the second light beam is a continuous light beam according to this application. A horizontal coordinate represents a time sequence, and a vertical coordinate represents a frequency of the second light beam. In this example, the second light beam is a periodic continuous light beam, and the frequency of the second light beam periodically changes with time. It may also be understood as that the frequency of the continuous light beam is time-modulated. A minimum frequency of the second light beam is f₀, a maximum frequency of the second light beam is fₘₐₓ, and ΔF=fₘₐₓ-f₀.

Specifically, for example, the second light beam is a continuous light beam. The continuous light beam is, for example, a periodic triangular wave (referring to FIG. 8a) or a periodic sawtooth wave (referring to FIG. 8b). For determining the distance of the target based on the continuous light beam, refer to the following descriptions of Implementation 2. Details are not described herein.

In a possible implementation, wavelengths of the first light beam and the second light beam may be the same, or may be different. This is not limited in this application.

Specifically, the first emitting module includes the first light source assembly and a first emitting optical assembly. The first light source assembly is configured to emit the N first light beams, and the first emitting optical assembly is configured to collimate the first light beam. The second emitting module includes the second light source assembly and a second emitting optical assembly. The second light source assembly is configured to emit the M second light beams, and the second emitting optical assembly is configured to collimate the second light beams.

For example, the first light source assembly may be, for example, a laser diode (laser diode, LD), a light-emitting diode (light-emitting diode, LED), a vertical cavity surface emitting laser (vertical cavity surface emitting laser, VCSEL), an edge emitting laser (edge emitting laser, EEL), a diode pumped solid state lase (diode pumped solid state laser, DPSS), or an optical fiber laser. It may be understood that the light source provided above is merely an example. This is not limited in this application. For the second light source assembly, refer to the descriptions of the first assembly. Details are not described herein again. The second light source assembly may be the same as or different from the first light source assembly. This is not limited in this application.

In a possible implementation, the first emitting optical assembly includes at least one first lens. For example, the first emitting optical assembly includes one first lens. For another example, the first emitting optical assembly includes three first lenses. Details are not listed herein one by one. The first lens may be a spherical lens, or may be an aspheric lens, or may be a cylindrical lens. The spherical lens includes but is not limited to a biconvex lens, a planoconvex lens, a biconcave lens, a planoconcave lens, a concave-convex lens, and the like. For example, the first emitting optical assembly includes a single spherical lens, a single aspheric lens, a combination of a plurality of spherical lenses, a combination of a plurality of aspheric lenses, a combination of a spherical lens and an aspheric lens, or the like. The combination of the plurality of spherical lenses or aspheric lenses helps improve imaging quality of the first emitting optical assembly, and helps reduce an aberration of the first emitting optical assembly. It may be understood that the first emitting optical assembly may be rotationally symmetric or may be non-rotationally symmetric. This is not limited in this application.

Further, optionally, a material of the first lens may be an optical material, for example, glass, resin, or crystal. When the material of the first lens is resin, the imaging quality of the first emitting optical assembly may be reduced. When the material of the first lens is glass, the imaging quality of the first emitting optical assembly is improved. It should be understood that when the first emitting optical assembly includes at least two first lenses, materials of the at least two first lenses may be totally the same, or may be partially the same, or may be totally different. This is not limited in this application.

In a possible implementation, a projection Dt₁ of a 1^{st} first lens in the first direction and a projection R₁ of the first reflective surface in the first direction meet 0<Dt₁≤R₁ (or represented as 0<Dt₁/R₁≤1). The 1^{st} first lens is a last lens through which the first light beam from the first light source assembly passes through the first emitting optical assembly. For example, Dt₁=R₁. In this way, it can be ensured that the first light beam is completely reflected by the first reflective surface of the first scanning module, so that a large first field of view can be formed. It should be noted that the foregoing relationship between the projection Dt₁ of the 1^{st} first lens in the first direction and the projection R₁ of the first reflective surface in the first direction is merely an example. It should be understood that Dt₁ may alternatively be greater than R₁, for example, 0<Dt₁/R₁≤2.

In a possible implementation, the second emitting optical assembly includes at least one second lens. For example, the first emitting optical assembly includes one first lens. For another example, the first emitting optical assembly includes three first lenses. Details are not listed herein one by one. For a type and a material of the second lens, refer to the foregoing descriptions of the first lens. Details are not described herein again. It should be noted that the type of the second lens may be the same as or different from a type of the first lens, and the material of the second lens may be the same as or different from the material of the first lens. This is not limited in this application.

In a possible implementation, a projection Dt₂ of a 1^{st} second lens in the first direction and a projection R₂ of the second reflective surface in the first direction meet 0<Dt₂≤R₂ (or represented as 0<Dt₂/R₂≤1). The 1^{st} second lens is a last lens through which the second light beam from the second light source assembly passes through the second emitting optical assembly. For example, Dt₂=R₂. In this way, it can be ensured that the second light beam is completely reflected by the second reflective surface of the second scanning module, so that a large second field of view can be formed. It should be noted that the foregoing relationship between the projection Dt₂ of the 1^{st} second lens in the first direction and the projection R₂ of the second reflective surface in the first direction is merely an example. It should be understood that Dt₂ may alternatively be greater than R₂, for example, 0<Dt₂/R₂≤2.

### 2. Scanning module

In a possible implementation, an included angle θ₁ between a normal line of the first reflective surface of the first scanning module and the first light beam constantly changes. With reference to FIG. 4, the included angle θ₁ between the normal line of the first reflective surface of the first scanning module and the first light beam meets 0°<θ₁<50°. In this way, it can be ensured that a projection area of the first light beam on the first reflective surface is small, so that a diameter of the first light beam may be large. This helps increase an effective amount of incident light of the first light beam in a system.

In a possible implementation, an included angle θ₂ between a normal line of the second reflective surface of the second scanning module and the second light beam constantly changes. With reference to FIG. 4, the included angle θ₂ between the normal line of the second reflective surface of the second scanning module and the second light beam meets 0°<θ₂≤50°. In this way, it can be ensured that a projection area of the second light beam on the second reflective surface is small, so that a diameter of the second light beam is large. This helps increase an effective amount of incident light of the second light beam in the system.

With reference to FIG. 4, a spacing L between the first scanning module and the second scanning module and a length M of a housing of the detection apparatus in the first direction meet 0.3≤L/W<1. The spacing L is a distance between a center of the first reflective surface of the first scanning module and a center of the second reflective surface of the second scanning module in the first direction. A larger value of L indicates a longer distance between a viewpoint and the scanning module, that is, a larger forward movement amount of the viewpoint indicates a smaller emission light cone of the detection apparatus. The viewpoint is an intersection point of an outer envelope of the first field of view and an outer envelope of the second field of view or an intersection point of extension lines.

The following separately describes the first scanning module and the second scanning module.

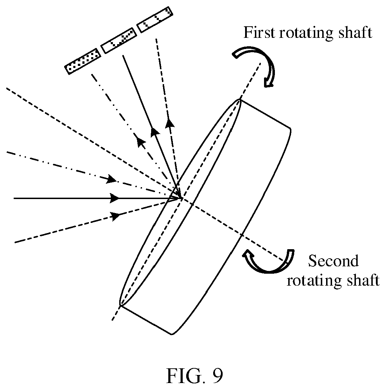

FIG. 9 is a diagram of a structure of the first scanning module according to this application. The first scanning module includes a first rotating shaft and a second rotating shaft, so that the first scanning module implements two-dimensional rotation, thereby implementing two-dimensional scanning on the first field of view. Further, the first rotating shaft is parallel to the first reflective surface, and the first rotating shaft is perpendicular to the second rotating shaft. For example, the first scanning module includes a third reflector and a first drive apparatus, the first reflective surface may be a reflective surface of the third reflector, and the first drive apparatus may include but is not limited to a first motor. It should be noted that, in FIG. 9, for example, a shape of the first scanning module is a cylindrical shape. Shapes of the first scanning module and the second scanning module are not limited in this application.

In a possible implementation, a first scanning angle at which the first scanning module rotates around the first rotating shaft is less than or greater than a first angle interval, and the first angle interval is an included angle between any two adjacent first light beams in the N first light beams. Further, the first angle interval is an interval between center angles of any two adjacent first light beams in the N first light beams. With reference to FIG. 5, φ₁=|wᵢ-wᵢ₊₁|. Based on this, the detection apparatus may have a small angular resolution when a first scanning angle is large.

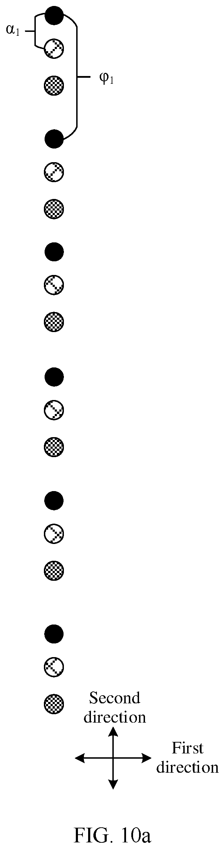

FIG. 10a is a diagram of a light spot obtained by reflecting the first light beam by the first reflective surface of the first scanning module according to this application. In this example, the six first light beams emitted by the first emitting module shown in FIG. 5 are used as examples, distribution of light spots formed by rotating around the first rotating shaft by the first scanning module by three first scanning angles is used as an example, and an example in which the first scanning angle is less than the first angle interval is used. Same filled circles indicate six light spots formed at a same first scanning angle.

To further increase the angular resolution of the detection apparatus, within 1/2 cycle time in which the first scanning module rotates around the first rotating shaft, the first scanning angle α and the first angle interval φ₁ meet 0.5≤α/φ₁<1 or 1<α/φ₁≤1.5.

The following shows an example of a possible relationship between the first angle interval, the first scanning angle, and the angular resolution.

Relationship 1 is as follows: φ₁=(N+1)β₁, and α₁=Nβ₁.

Based on this, α₁=φ₁-β₁, that is, β₁=φ₁-α₁. It may also be understood as that the first scanning angle α₁ may be set to φ₁-β₁. This can further increase the angular resolution of the detection apparatus.

Refer to Table 1. The six first light beams emitted by the first emitting module shown in FIG. 5 are used as examples. In this example, for example, γ₁=γ₂=γ₃=γ₄=γ₅=γ₆=0.14°. For example, the first angle interval between two adjacent first light beams is φₗ=|wᵢ-wᵢ₊₁|=0.28°. For example, the first scanning angle at which the first scanning module performs scanning around the first rotating shaft within the 1/2 cycle time is α₁=0.24°, that is, an angle interval between two adjacent moments is the first scanning angle.

**Table 1 Information about the first light beam scanned, at different moments, by the first scanning module by rotating around the first rotating shaft**

| Light source channel number | Center angles of first light beams emitted by light sources of different channels at different scanning moments | | | | | | | | | | | | | | |
|---|---|---|---|---|---|---|---|---|---|---|---|---|---|---|---|
| | T1 | T2 | T3 | T4 | T5 | T6 | ... | | | | | | | | |
| 1 | -7.18 | -6.94 | -6.7 | -6.46 | -6.22 | -5.98 | ... | -0.7 | ... | 4.58 | 4.82 | 5.06 | 5.3 | 5.54 | 5.78 |
| 2 | -6.9 | -6.66 | -6.42 | -6.18 | -5.94 | -5.7 | | -0.42 | | 4.86 | 5.1 | 5.34 | 5.58 | 5.82 | 6.06 |
| 3 | -6.62 | -6.38 | -6.14 | -5.9 | -5.66 | -5.42 | | -0.14 | | 5.14 | 5.38 | 5.62 | 5.86 | 6.1 | 6.34 |
| 4 | -6.34 | -6.1 | -5.86 | -5.62 | -5.38 | -5.14 | | 0.14 | | 5.42 | 5.66 | 5.9 | 6.14 | 6.38 | 6.62 |
| 5 | -6.06 | -5.82 | -5.58 | -5.34 | -5.1 | -4.86 | | 0.42 | | 5.7 | 5.94 | 6.18 | 6.42 | 6.66 | 6.9 |
| 6 | -5.78 | -5.54 | -5.3 | -5.06 | -4.82 | -4.58 | | 0.7 | | 5.98 | 6.22 | 6.46 | 6.7 | 6.94 | 7.18 |

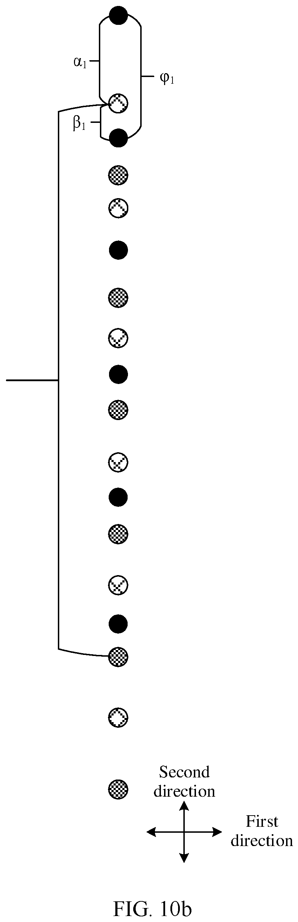

In Table 1, a horizontal direction represents the center angles of the first light beams at different moments, and a vertical direction represents the center angles of the six first light beams. β₁=φ₁-α₁=0.28°-0.24°=0.04°. In other words, an interval between the light spots obtained by performing scanning by the first scanning module around the first rotating shaft within the 1/2 cycle time is 0.04°. Refer to FIG. 10b. It may also be understood as that the angular resolution of the detection apparatus is 0.04°. Further, an obtained point cloud interval is also 0.04°. It should be understood that the light source channel numbers in Table 1 may identify the six different light beams.

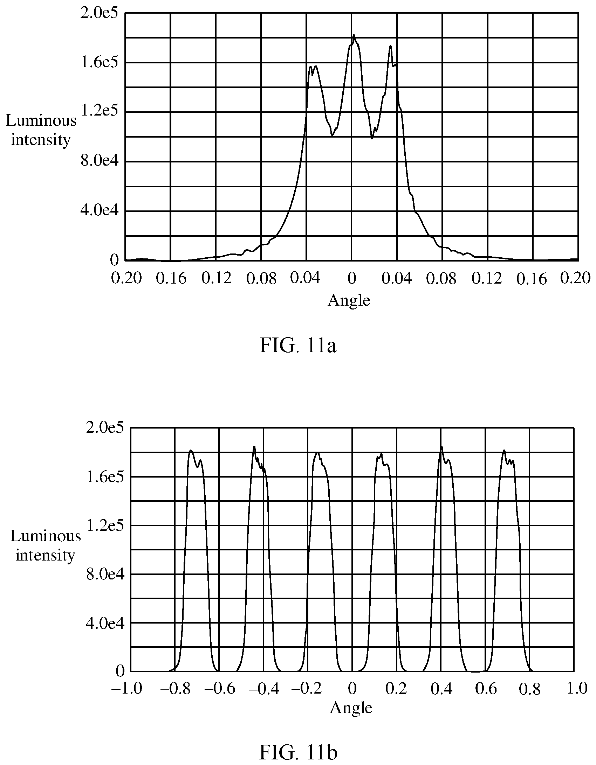

FIG. 11a is a diagram of energy distribution of the first light beam in angular space in a first direction according to this application. The six first light beams emitted by the first emitting module shown in FIG. 5 are used as examples. A horizontal coordinate represents an angle in the first direction, and a unit is °. A vertical coordinate represents luminous intensity, and a unit is watt/square meter/solid angle (w/mm2/sr). It can be learned from FIG. 11a that energy distribution of the first light beam in the first direction weakens from a middle to edges.

FIG. 11b is a diagram of energy distribution of the first light beam in angular space in a second direction according to this application. It can be learned from FIG. 11b that the first angle interval φ₁ between the six first light beams is 0.24°, and the ranges of the fields of view of the six first light beams is γ₁=γ₂=γ₃=γ₄=γ₅=γ₆=0.14°.

Relationship 2 is as follows: φ₁=(N-1)β₁, and α=Nβ₁.

Based on this, α₁=φ₁+β₁, that is, β₁=α₁-φ₁. It may also be understood as that the first scanning angle α₁ may be set to φ₁+β₁, to further increase the angular resolution of the detection apparatus.

Based on Relationship 1 or Relationship 2, the relationship between the first angle interval and the first scanning angle for emitting the plurality of first light beams by the first emitting module is designed, so that a final point cloud interval can be less than the first scanning angle. This increases the angular resolution of the detection apparatus.

In a possible implementation, the first scanning module performs non-uniform scanning around the first rotating shaft; and/or the first scanning module performs non-uniform scanning around the second rotating shaft. Specifically, the first drive apparatus may drive, by using a non-uniform triangular wave or a sine wave, the third reflector to rotate. Further, the light spots obtained by reflecting the first light beam by the first reflective surface of the first scanning module are non-uniformly distributed in the first direction; and/or the light spots obtained by reflecting the first light beam by the first reflective surface of the first scanning module are non-uniformly distributed in the second direction.

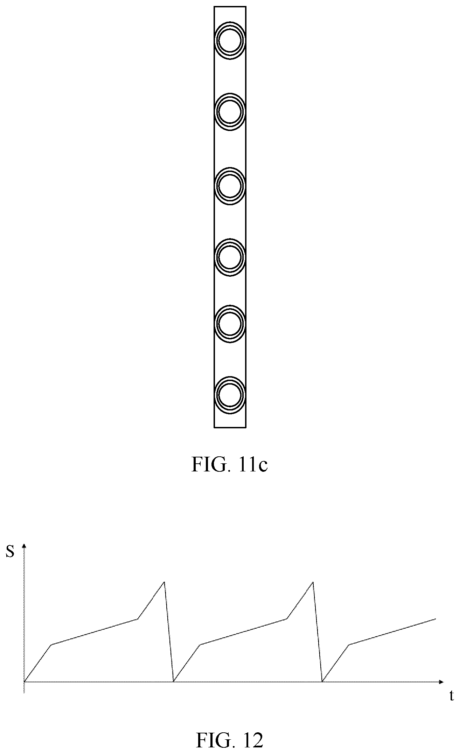

FIG. 12 is a diagram of non-uniform scanning according to this application. A horizontal coordinate represents a scanning time sequence, and a vertical coordinate represents a scanning location in the second direction. In this example, for example, a scanning speed of the first scanning module is fast first, then slow, and then fast.

It may be understood that, if the first light beam is a pulse light beam, an interval between the light spots is equal to the scanning speed multiplied by a pulse interval. If the first light beam is a continuous light beam, an interval between the light spots is equal to the speed multiplied by a sampling interval (namely, T in FIG. 7). Because the pulse interval at which the first emitting module emits the first light beam is fixed, a slower scanning speed indicates a smaller interval between adjacent light spots and a higher angular resolution of the detection apparatus. To implement a high resolution of a region of interest (ROI), a scanning speed in a field of view of interest is lower than a scanning speed in a field of view of uninterest.

In a possible implementation, the second scanning module includes a third rotating shaft and a fourth rotating shaft, and the second scanning module rotates around the third rotating shaft and the fourth rotating shaft, so that the second scanning module implements two-dimensional rotation, to implement two-dimensional scanning on the second field of view. Further, the third rotating shaft is perpendicular to the fourth rotating shaft, and the third rotating shaft is parallel to the second reflective surface. It may be understood that, for a structure of the second scanning module, refer to the descriptions of the structure of the first scanning module in FIG. 9. Details are not described herein again.

For example, the second scanning module includes a fourth reflector and a second drive apparatus, the second reflective surface may be a reflective surface of the fourth reflector, and the second drive apparatus may include but is not limited to a second motor. It may be understood that the second motor may be the same as or different from the first motor. This is not limited in this application. In addition, the third reflector and the fourth reflector may be the same or different. This is not limited in this application.

In a possible implementation, a second scanning angle at which the second scanning module rotates around the third rotating shaft is less than or greater than a second angle interval, and the second angle interval is an included angle between any two adjacent second light beams in the M second light beams. For distribution of light spots of the M second light beams, refer to the foregoing descriptions of FIG. 10a. Details are not described herein again.

Further, the second scanning angle α₂ and the second angle interval φ₂ meet 0.5≤α₁/φ₁<1 or 1<α₁/φ₁≤1.5. For a possible relationship between the second angle interval, the second scanning angle, and the angular resolution, refer to the descriptions of Relationship 1 and Relationship 2. Specifically, the "first angle interval" in Relationship 1 and Relationship 2 may be replaced with the "second angle interval", and the "first scanning angle" may be replaced with the "second scanning angle". Details are not described herein again.

Based on the first scanning module and the second scanning module, the first light beam is reflected by the first reflective surface of the first scanning module to form the first field of view, and the second light beam is reflected by the second reflective surface of the second scanning module to form the second field of view. The first field of view and the second field of view partially overlap in the first direction, and a light spot of the first light beam and a light spot of the second light beam in an overlapping field of view are staggered. That the light spot of the first light beam and the light spot of the second light beam are staggered may also be understood as that the light spot of the first light beam does not coincide with the light spot of the second light beam. For example, the overlapping field of view is approximately ±10°. The first field of view and the second field of view partially overlap, so that scanning performance of an overlapping part can be enhanced. A divergence angle and the like at which the detection apparatus emits light in a fastening mechanical part are reduced through overlapping, to avoid blocking of the emission light cone of the detection apparatus.

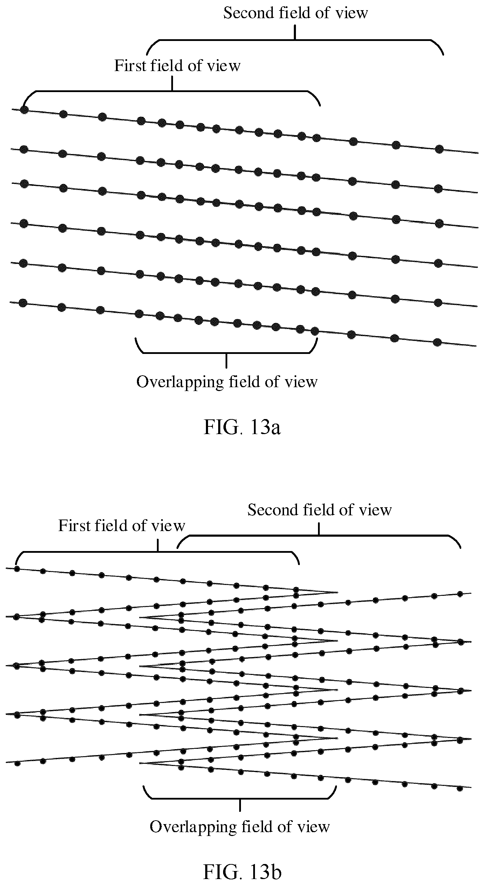

Refer to FIG. 13a. For example, the first emitting module emits eight uniform first light beams, the second emitting module emits eight uniform second light beams, and both the first scanning module and the second scanning module perform uniform scanning. The eight first light beams are reflected by the first reflective surface of the first scanning module to form the first field of view, and light spots obtained by scanning the eight first light beams by the second scanning module at six different moments are uniformly distributed. The eight second light beams are reflected by the second reflective surface of the second scanning module to form the second field of view, and light spots obtained by scanning the eight second light beams by the second scanning module at six different moments are also uniformly distributed. The first field of view and the second field of view are spliced to form a total field of view of the detecting apparatus. This helps increase the total field of view of the detection apparatus. Further, the first field of view and the second field of view partially overlap, and a light spot of the first light beam and a light spot of the second light beam in an overlapping field of view may be staggered in the first direction. Therefore, an angular resolution in the overlapping field of view can be increased, and point cloud density of the overlapping field of view can be increased.

It should be noted that, the light spot of the first light beam and the light spot of the second light beam in the overlapping field of view may be staggered in the first direction, or may be staggered in the second direction (referring to FIG. 13b), or may be staggered in both the first direction and the second direction. This is not limited in this application.

In this application, the detection apparatus may further include a receiving module, and may further include a reflection module. The following separately describes the receiving module and the reflection module in detail.

### 3. Receiving module

In a possible implementation, the detection apparatus includes a first receiving module and a second receiving module, the first receiving module is configured to receive the first echo signal, and the second receiving module is configured to receive the second echo signal. The distribution of the light spots of the first light beam shown in FIG. 11b is used as an example. Distribution of light spots of the first echo signal is in a one-to-one correspondence with the distribution of the light spots of the first light beam. Refer to the distribution of the light spots of the first echo signal shown in FIG. 11c.

The first receiving module includes a first receiving optical assembly, and the first receiving optical assembly includes at least one third lens. For example, the first receiving optical assembly includes one third lens. For another example, the first receiving optical assembly includes five third lenses. Details are not listed herein one by one. The second receiving module includes a second receiving optical assembly, and the second receiving optical assembly includes at least one fourth lens. For example, the second receiving optical assembly includes one fourth lens. For another example, the second receiving optical assembly includes five fourth lenses. Details are not listed herein one by one. For types and materials of the third lens and the fourth lens, refer to the foregoing descriptions of the first lens. Details are not described herein again. It should be noted that the third lens may be the same as or different from the first lens, the fourth lens may be the same as or different from the first lens, and the third lens may be the same as or different from the fourth lens. This is not limited in this application.

In a possible implementation, the projection Dt₁ of the 1^{st} first lens in the first direction and a projection Dr₁ of a 1^{st} third lens in the first direction meet 0<Dt₁/Dr₁≤1. The 1^{st} first lens is the last lens through which the first light beam passes through the first emitting optical assembly, and the 1^{st} third lens is a 1^{st} lens through which the first echo signal passes through the first receiver optical assembly. Through setting of 0<Dt₁/Dr₁<1, it can be ensured that an effective area in which the first receiving optical assembly receives the first echo signal is large, so that a loss of the first echo signal can be reduced as much as possible.

In a possible implementation, the projection Dt₂ of the 1^{st} second lens in the first direction and a projection Dr₂ of a 1^{st} fourth lens in the first direction meet 0<Dt₂/Dr₂≤1. The 1^{st} second lens is the last lens through which the second light beam passes through the second emitting optical assembly, and the 1^{st} fourth lens is a 1^{st} lens through which the second echo signal passes through the second receiver optical assembly. Through setting of 0<Dt₂/Dr₂≤1, it can be ensured that an effective area in which the second receiving optical assembly receives the second echo signal is large, so that a loss of the second echo signal can be reduced as much as possible.

Further, optionally, the first receiving module further includes a first detection assembly, and the second receiving module further includes a second detection assembly. The first detection assembly is configured to detect the first echo signal, including but not limited to converting the first echo signal into a first electrical signal. The first electrical signal is used to determine first association information of a target. The first association information of the target may include but is not limited to first distance information of the target, a first orientation of the target, a first speed of the target, and/or first grayscale information of the target. The second detection assembly is configured to detect the second echo signal, including but not limited to converting the second echo signal into a second electrical signal. The second electrical signal is used to determine second association information of the target. The second association information of the target may include but is not limited to second distance information of the target, a second orientation of the target, a second speed of the target, and/or second grayscale information of the target.

For example, the first detection assembly may be, for example, a photoelectric detector (photoelectric detector, PD), a positive intrinsic negative (positive intrinsic negative, PIN) photodiode (also referred to as a PIN-node diode), or an avalanche photodiode (avalanche photodiode, APD), or may be the foregoing pixel array. A pixel in the pixel array may be, for example, one or more single-photon avalanche diodes (single-photon avalanche diodes, SPADs), or silicon photomultipliers (silicon photomultipliers, SiMPs), or PIN-type photodiodes, or APDs. For a possible example of the second detection assembly, refer to the descriptions of the first detection assembly. It should be understood that the first detection assembly may be the same as or different from the second detection assembly. This is not limited in this application.

Specifically, the first electrical signal includes strength of the first echo signal, a first time difference or a first frequency difference between the first light beam and the first echo signal, and the like. The first association information of the target may be obtained by using the strength of the first echo signal identified by the first detection assembly and the first time difference or the first frequency difference between the first light beam and the first echo signal. Based on a same principle, the second association information of the target may be obtained by using the strength of the second echo signal identified by the second detection assembly and the second time difference or the second frequency difference between the second light beam and the second echo signal. Further, final association information of the target may be determined based on the first association information of the target and the second association information of the target. A specific process of obtaining the first association information and the second association information of the target may be performed by a control module. For descriptions of the control module, refer to the following descriptions. Details are not described herein.

Specifically, with reference to the foregoing types of the first light beam and the second light beam, the following example shows two implementations of determining a distance of the target.

Implementation 1: The distance of the target is determined based on a premise that both the first light beam and the second light beam are pulse light beams.

In a possible implementation, the first time difference Δt₁ between receiving time of the first echo signal and emitting time of the first light beam is measured, and the first distance between the detected target and the detection apparatus may be determined according to A₁=Δt₁c/2, where c indicates a speed of light, and A₁ indicates the first distance between the detected target and the detection apparatus.

Based on the foregoing same principle, the time difference Δt₂ between receiving time of the second echo signal and emitting time of the second light beam is measured, and the second distance between the detected target and the detection apparatus may be determined according to A₂=Δt₂c/2, where c indicates the speed of light, and A₂ indicates the second distance between the detected target and the detection apparatus.

Further, optionally, an average value of the first distance and the second distance may be used as a distance between the target and the detection apparatus.

Implementation 2: The distance of the target is determined based on a premise that both the first light beam and the second light beam are continuous light beams.

Because there is the time difference between the first light beam and the first echo signal, frequencies of the first echo signal and the first light beam are different at a same moment.

Based on this, a third time difference between the first light beam and the first echo signal may be obtained by measuring the first frequency difference between the first light beam and the first echo signal, that is, Δt₃=ΔF/K, where K indicates a pulse slope, and K=ΔF/T₃=(fₘₐₓ-f₀)/T₃, where T₃ indicates a periodicity of the first light beam. Further, A₃=Δt₃c/2, where c indicates the speed of light, and A₃ indicates a third distance between the detected target and the detection apparatus. Further, a frequency difference (f₁-f₂) between the first echo signal and the first light beam in different periodicities is measured, and a first movement speed v₁ of the measured target relative to the detection apparatus may be obtained according to v₁=2c(f₁-f₂)/KT₃.

Based on a same principle, a fourth distance A₄ and a second movement speed v₂ between the detected target and the detection apparatus may be determined. Details are not described herein again.

Further, optionally, an average value of the third distance and the fourth distance may be used as the distance between the target and the detection apparatus. An average value of the first movement speed and the second movement speed may be used as a movement speed of the detected target relative to the detection apparatus.

It should be noted that, if one of the first light beam and the second light beam is a continuous light beam, and the other is a pulse light beam, for the pulse light beam, the distance between the detected target and the detection apparatus may be determined based on Implementation 1, and the distance between the detected target and the detection apparatus may be determined based on Implementation 2 for the continuous light beam. Further, an average value of the two determined distances may be used as a final distance between the detected target and the detection apparatus.

### 4. Refraction module

In a possible implementation, a first reflection module is included between the first light source assembly and the first emitting optical assembly, and/or a second reflection module is included between the second light source assembly and the second emitting optical assembly. The first reflection module is configured to: change a propagation optical path of the first light beam, and propagate the first light beam to the first scanning module; and/or the second reflection module is configured to: change a propagation optical path of the second light beam, and propagate the second light beam to the second scanning module. The first reflection module and the second reflection module help miniaturize the detection apparatus.

Further, the first reflection module includes at least one first reflector. For example, a quantity of first reflectors included in the first reflection module may be greater than 0 and less than or equal to 15. The first reflector includes but is not limited to a first planar reflector, a first reflection prism, or a first semi-transmission semi-reflection mirror. The second reflection module includes at least one second reflector. For example, a quantity of second reflectors included in the second reflection module may be greater than 0 and less than or equal to 15. The second reflector includes but is not limited to a second planar reflector, a second reflection prism, or a second semi-transmission semi-reflection mirror. It should be noted that the first reflector may be the same as or different from the second reflector. This is not limited in this application.

Based on the foregoing content, the following provides two specific implementations of the foregoing detection apparatus to further understand the structure of the detection apparatus. It should be noted that, in the foregoing modules, if no special description is provided or no logical conflict exists, another possible detection apparatuses may be formed based on an internal logical relationship of the modules. The following uses an example in which the detection apparatus is a lidar for description.

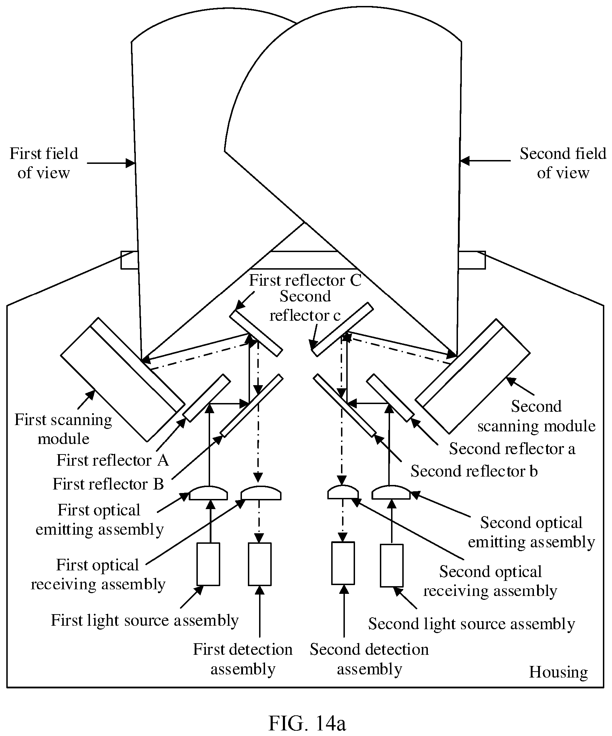

FIG. 14a is a diagram of a structure of a lidar according to this application. The lidar may include a first emitting module, a second emitting module, a first scanning module, a second scanning module, a first reflection module, a second reflection module, a first receiving module, and a second receiving module. The first emitting module includes a first light source assembly and a first optical emitting assembly, and the second emitting module includes a second light source assembly and a second optical emitting assembly. The first scanning module includes a first reflective surface, and the second scanning module includes a second reflective surface. The first scanning module includes a first rotation shaft and a second rotation shaft that are perpendicular to each other, and the first rotating shaft is parallel to the first reflective surface. The second scanning module includes a third rotation shaft and a fourth rotating shaft that are perpendicular to each other, and the third rotating shaft is parallel to the second reflective surface. The first reflection module includes a first reflector A, a first reflector B, and a first reflector C. The second reflection module includes a second reflector a, a second reflector b, and a second reflector c. The first receiving module includes a first detection assembly and a first optical receiving assembly, and the second receiving module includes a second detection assembly and a second optical receiving assembly.

The first light source assembly is configured to emit a first light beam. The first optical emitting assembly is configured to: collimate the first light beam, and propagate a collimated first light beam to the first reflector A. After being reflected by the first reflector A, the first reflector B, and the first reflector C, the first light beam is propagated to the first reflective surface of the first scanning module. The first scanning module rotates under driving of a first drive assembly, to reflect the collimated first light beam to different locations in a detection region at different scanning angles, so as to form a first field of view. The first light beam is reflected or scattered by a target in the detection region to obtain a first echo signal, and the first echo signal is reflected back to the first optical receiving assembly by using the first reflector B and the first reflector C. The first optical receiving assembly receives the first echo signal, and aggregates the first echo signal to the first detection assembly. The first detection assembly is configured to detect the first echo signal. Similarly, the second light source assembly is configured to emit a second light beam. The second optical emitting assembly is configured to: collimate the second light beam, and propagate a collimated second light beam to the second reflector a. After being reflected by the second reflector a, the second reflector b, and the second reflector c, the second light beam propagates to the second reflective surface of the second scanning module. The second scanning module rotates under driving of a second drive assembly, to reflect the collimated second light beam to different locations in the detection region at different scanning angles, so as to form a second field of view. The second light beam is reflected or scattered by the target in the detection region to obtain a second echo signal, and the second echo signal is reflected back to the second optical receiving assembly by using the second reflector b and the second reflector c. The second optical receiving assembly receives the second echo signal, and aggregates the second echo signal to the second detection assembly. The second detection assembly is configured to detect the second echo signal.

It should be noted that the detection apparatus in this application may further include more emitting modules and more receiving modules. This is not limited in this application. For example, the lidar includes four emitting modules and four receiving modules.

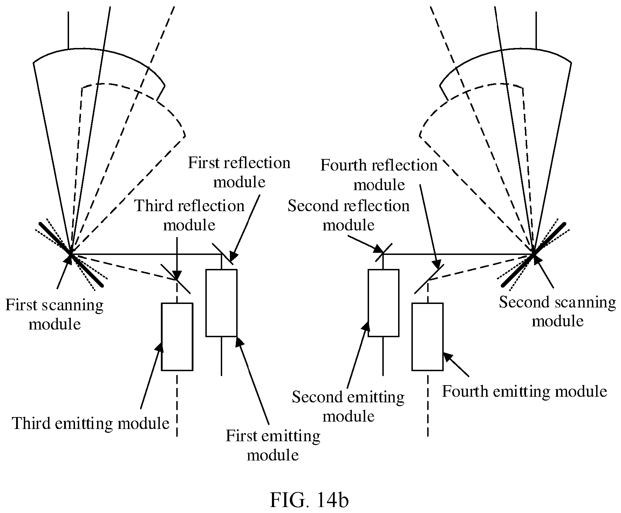

FIG. 14b is a diagram of a structure of another lidar according to this application. The lidar includes a first emitting module, a second emitting module, a third emitting module, a fourth emitting module, a first receiving module, a second receiving module, a third receiving module, a fourth receiving module, a first scanning module, a second scanning module, a first reflection module, a second reflection module, a third reflection module, and a fourth reflection module. The first emitting module and the third emitting module share the first scanning module, the second emitting module and the fourth emitting module share the second scanning module, the first receiving module and the third receiving module share the first scanning module, and the second receiving module and the fourth receiving module share the second scanning module. The third emitting module is adjacent to the first emitting module, and the fourth emitting module is adjacent to the second emitting module. It should be noted that the first receiving module, the second receiving module, the third receiving module, and the fourth receiving module are not shown in FIG. 14b. For a location relationship between the four receiving modules, refer to the example in FIG. 14a. For the third emitting module, refer to the descriptions of the first emitting module. For the fourth emitting module, refer to the descriptions of the second emitting module. Details are not described herein again. It may be understood that the first emitting module, the second emitting module, the third emitting module, and the fourth emitting module may be the same or may be different. This is not limited in this application. For the third receiving module, refer to the descriptions of the first receiving module. For the fourth receiving module, refer to the descriptions of the second receiving module. Details are not described herein again. It may be understood that the first receiving module, the second receiving module, the third receiving module, and the fourth receiving module may be the same or may be different. This is not limited in this application.

For an optical path of a first light beam emitted by the first emitting module, refer to the descriptions in FIG. 14a. Details are not described herein again. The third emitting module is configured to emit H third light beams, where H is an integer greater than 1. For a propagation optical path of the third light beam, refer to the propagation optical path of the first light beam. Details are not described herein again. For an optical path of the second light beam emitted by the second emitting module, refer to the descriptions in FIG. 14a. Details are not described herein again. The fourth emitting module emits K fourth light beams, where K is an integer greater than 1. For a propagation optical path of the fourth light beam, refer to the propagation optical path of the second light beam. Details are not described herein again.

Further, the first light beam is scanned by the first scanning module to obtain a first field of view, the third light beam is scanned by the first scanning module to obtain a third field of view, the second light beam is scanned by the second scanning module to obtain a second field of view, and the fourth light beam is scanned by the second scanning module to obtain a fourth field of view. The first field of view and the third field of view partially overlap, and/or the second field of view and the fourth field of view partially overlap, and/or the first field of view and the second field of view partially overlap. Different fields of view are set to be partially overlapped, so that scanning performance of an overlapping part can be enhanced. A divergence angle and the like at which a detection apparatus emits light in a fastening mechanical part can be reduced through overlapping, to avoid blocking of an emission light cone of the detection apparatus. By designing different field of view to connect to each other, it is helpful to increase a range of a field of view of the detection apparatus. In other words, the four emitting modules help increase the range of the field of view of the detection apparatus.

In a possible implementation, in an overlapping field of view of the first field of view and the third field of view, a light spot of the first light beam and a light spot of the third light beam are staggered. In an overlapping field of view of the second field of view and the fourth field of view, a light spot of the second light beam and a light spot of the fourth light beam are staggered. In an overlapping field of view of the first field of view and the second field of view, a light spot of the first light beam and a light spot of the second light beam are staggered. Light spots of different light beams are set to be staggered in an overlapping field of view, so that an angular resolution in the overlapping field of view is increased.

For example, a range of the first field of view in a first direction is -40° to -10°, a range of the third field of view in the first direction is -20° to +10°, a range of the second field of view in the first direction is -10° to +20°, and a range of the fourth field of view in the first direction is +10° to +40°. Based on this, a range of the overlapping field of view of the first field of view and the third field of view in the first direction is -20° to -10°, a range of the overlapping field of view of the second field of view and the fourth field of view in the first direction is 10° to 20°, and a range of the overlapping field of view of the first field of view and the second field of view in the first direction is 0° to 10°.

Based on the foregoing described structure and function principles of the detection apparatus, this application may further provide a terminal device. The terminal device may include the optical display apparatus in any one of the foregoing embodiments. For example, the terminal device may be, for example, a vehicle (for example, an unmanned vehicle, an intelligent vehicle, an electric vehicle, or a digital vehicle), a robot, a surveying and mapping device, an uncrewed aerial vehicle, an intelligent home device (for example, a television, a ground-scanning robot, an intelligent desk lamp, a sound system, an intelligent lighting system, an electrical control system, home background music, a home theater system, an intercom system, or video surveillance), or an intelligent manufacturing device (for example, an industrial device), intelligent transportation equipment (for example, an AGV, an unmanned transport vehicle, or a truck), or an intelligent terminal (for example, a mobile phone, a computer, a tablet computer, a palmtop computer, a desktop computer, a headset, a speaker, a wearable device, a vehicle-mounted device, a virtual reality device, or an augmented reality device).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "uniformity" does not mean absolute uniformity, and a specific engineering error can be allowed. "Perpendicular" does not mean absolute perpendicularity, and a specific engineering error can be allowed. "At least one" means one or more, and "a plurality of" means two or more. In addition, "and/or" describes an association between associated objects, and indicates that three relationships may exist. For example, A and/or B may represent the following cases: Only A exists, both A and B exist, and only B exists, where A and B may be singular or plural. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural. In text descriptions of this application, the character "/" generally indicates an "or" relationship between associated objects. In a formula of this application, the character "/" indicates a "division" relationship between associated objects. In addition, in this application, the term "for example" is used to represent giving an example, an illustration, or a description. Any embodiment or design scheme described as an "example" in this application should not be explained as being more preferred or having more advantages than another embodiment or design scheme. Alternatively, it may be understood as that the word "example" is used to present a concept in a specific manner, and does not constitute a limitation on this application.

It may be understood that, in this application, various numeric numbers are distinguished merely for ease of description and are not used to limit the scope of the embodiments of this application. The sequence numbers of the foregoing processes do not mean execution sequences, and the execution sequences of the processes should be determined based on functions and internal logic of the processes. The terms "first", "second", and the like are used to distinguish between similar objects without having to describe a specific order or sequence. Moreover, the terms "include", "have", and any other variant thereof are intended to cover a non-exclusive inclusion, for example, including a series of steps or units. For example, a process, method, system, product, or device that includes a series of steps or units is not necessarily limited to those steps or units expressly listed, but may include other steps or units not expressly listed or inherent to such a process, method, system, product, or device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A detection apparatus, comprising a first scanning module, a second scanning module, a first emitting module, and a second emitting module, wherein the first scanning module comprises a first reflective surface, the second scanning module comprises a second reflective surface, the first reflective surface and the second reflective surface are disposed opposite to each other, and an included angle between the first reflective surface and the second reflective surface is greater than 0° and less than 180°;
the first emitting module is configured to emit a first light beam;
the second emitting module is configured to emit a second light beam;
the first reflective surface of the first scanning module is configured to: reflect the first light beam to form a first field of view, and reflect a first echo signal to a first receiving module, wherein the first echo signal is obtained by reflecting the first light beam by a target in the first field of view; and
the second reflective surface of the second scanning module is configured to: reflect the second light beam to form a second field of view, and reflect a second echo signal to a second receiving module, wherein the second echo signal is obtained by reflecting the second light beam by a target in the second field of view.

2. The apparatus according to claim 1, wherein the first light beam reflected by the first reflective surface and the second light beam reflected by the second reflective surface are emitted opposite to each other.

3. The apparatus according to claim 1 or 2, wherein the first field of view partially overlaps the second field of view.

4. The apparatus according to claim 3, wherein a light spot of the first light beam and a light spot of the second light beam in an overlapping field of view are staggered.

5. The apparatus according to any one of claims 1 to 4, wherein a spacing L between the first scanning module and the second scanning module and a length M of a housing of the detection apparatus in a first direction meet the following relationship: 0.3≤L/W<1; and
the spacing L is a distance between a center of the first reflective surface and a center of the second reflective surface in the first direction.

6. The apparatus according to any one of claims 1 to 5, wherein an included angle θ₁ between the first light beam and a normal line of the first reflective surface meets the following relationship: 0°<θ₁≤50°; and/or
an included angle θ₂ between the second light beam and a normal line of the second reflective surface meets the following relationship: 0°<θ₂≤50°.

7. The apparatus according to any one of claims 1 to 6, wherein the first light beam and the second light beam are pulse light beams;
the first emitting module comprises a first light source assembly, and the second emitting module comprises a second light source assembly; and
start time at which the first light source assembly emits the first light beam is different from start time at which the second light source assembly emits the second light beam.

8. The apparatus according to any one of claims 1 to 6, wherein at least one of the first light beam and the second light beam is a continuous light beam.

9. The apparatus according to any one of claims 1 to 8, wherein a wavelength of the first light beam is the same as or different from a wavelength of the second light beam.

10. The apparatus according to any one of claims 1 to 9, wherein the first emitting module comprises a first emitting optical assembly, and the first emitting optical assembly comprises at least one first lens; and
a projection Dt₁ of a 1^{st} first lens in the first direction and a projection R₁ of the first reflective surface in the first direction meet the following relationship: 0<Dt₁≤R₁, wherein
the 1^{st} first lens is a last lens through which the first light beam passes through the first emitting optical assembly.

11. The apparatus according to any one of claims 1 to 10, wherein the second emitting module comprises a second emitting optical assembly, and the second emitting optical assembly comprises at least one second lens; and
a projection Dt₂ of a 1^{st} second lens in the first direction and a projection R₂ of the second reflective surface in the first direction meet the following relationship: 0<Dt₂≤R₂, wherein
the 1^{st} second lens is a last lens through which the second light beam passes through the second emitting optical assembly.

12. The apparatus according to claim 10 or 11, wherein the detection apparatus further comprises the first receiving module and the second receiving module;
the first receiving module is configured to receive the first echo signal; and
the second receiving module is configured to receive the second echo signal.

13. The apparatus according to claim 12, wherein the first receiving module comprises a first receiving optical assembly, and the first receiving optical assembly comprises at least one third lens; and
a projection Dr₁ of a 1^{st} third lens in the first direction and the projection R₁ of the first reflective surface in the first direction meet the following relationship: 0<Dr₁<R₁, wherein
the 1^{st} third lens is a 1^{st} lens through which the first echo signal passes through the first receiving optical assembly.

14. The apparatus according to claim 13, wherein the projection Dt₁ of the 1^{st} first lens in the first direction and the projection Dr₁ of the 1^{st} third lens in the first direction meet the following relationship: 0<Dt₁/Dr₁≤1.

15. The apparatus according to any one of claims 12 to 14, wherein the second receiving module comprises a second receiving optical assembly, and the second receiving optical assembly comprises at least one fourth lens; and
a projection Dr₂ of a 1^{st} fourth lens in the first direction and the projection R₂ of the second reflective surface in the first direction meet the following relationship: 0<Dr₂≤R₂, wherein
the 1^{st} fourth lens is a 1^{st} lens through which the second echo signal passes through the second receiving optical assembly.

16. The apparatus according to claim 15, wherein the projection Dt₂ of the 1^{st} second lens in the first direction and the projection Dr₂ of the 1^{st} fourth lens in the first direction meet the following relationship: 0<Dt₂/Dr₂≤1.

17. The apparatus according to any one of claims 13 to 16, wherein the first lens, the second lens, the third lens, and the fourth lens comprise any one of the following:
a spherical lens, an aspheric lens, or a cylindrical lens.

18. The apparatus according to any one of claims 1 to 17, wherein the first scanning module comprises a first rotating shaft and a second rotating shaft, and the second rotating shaft is perpendicular to the first rotating shaft.

19. The apparatus according to claim 18, wherein the first rotating shaft is parallel to the first reflective surface.

20. The apparatus according to claim 18 or 19, wherein the first scanning module performs non-uniform scanning around the first rotating shaft; and/or
the first scanning module performs non-uniform scanning around the second rotating shaft.

21. The apparatus according to any one of claims 1 to 20, wherein the second scanning module comprises a third rotating shaft and a fourth rotating shaft, and the fourth rotating shaft is perpendicular to the third rotating shaft.

22. The apparatus according to claim 21, wherein the third rotating shaft is parallel to the second reflective surface.

23. The apparatus according to claim 21 or 22, wherein the second scanning module performs non-uniform scanning around the third rotating shaft; and/or
the second scanning module performs non-uniform scanning around the fourth rotating shaft.

24. The apparatus according to claim 20 or 23, wherein the non-uniform scanning comprises: a scanning speed in a field of view of interest is less than a scanning speed in a field of view of uninterest, wherein
the first field of view comprises the field of view of interest and the field of view of uninterest, and/or the second field of view comprises the field of view of interest and the field of view of uninterest.

25. The apparatus according to any one of claims 18 to 24, wherein a first scanning angle at which the first scanning module rotates around the first rotating shaft is less than or greater than a first angle interval, and the first angle interval is an included angle between two adjacent first light beams.

26. The apparatus according to claim 25, wherein the first scanning angle α₁ and the first angle interval φ₁ meet the following relationship: 0.5≤α₁/φ₁<1 or 1<α₁/φ₁≤1.5.

27. The apparatus according to any one of claims 18 to 26, wherein a second scanning angle at which the second scanning module rotates around the third rotating shaft is less than or greater than a second angle interval, and the second angle interval is an included angle between two adjacent second light beams.

28. The apparatus according to claim 27, wherein the second scanning angle α₂ and the second angle interval φ₂ meet the following relationship: 0.5≤α₁/φ₁<1 or 1<α₁/φ₁≤1.5.

29. The apparatus according to any one of claims 1 to 28, wherein the apparatus further comprises a first reflection module and/or a second reflection module;
the first reflection module is configured to: change a propagation optical path of the first light beam, and propagate the first light beam to the first scanning module; and/or
the second reflection module is configured to: change a propagation optical path of the second light beam, and propagate the second light beam to the second scanning module.

30. The apparatus according to claim 29, wherein the first reflection module comprises at least one first reflector; and/or
the second reflection module comprises at least one second reflector.

31. The apparatus according to any one of claims 1 to 30, wherein the detection apparatus further comprises a third emitting module and a fourth emitting module;
the third emitting module is configured to emit a third light beam;
the fourth emitting module is configured to emit a fourth light beam;
the first reflective surface of the first scanning module is further configured to: reflect the third light beam to a third field of view, and reflect a third echo signal to a third receiving module, wherein the third echo signal is obtained by reflecting the third light beam by a target in the third field of view; and
the second reflective surface of the second scanning module is further configured to: reflect the fourth light beam to a fourth field of view, and reflect a fourth echo signal to a fourth receiving module, wherein the fourth echo signal is obtained by reflecting the fourth light beam by a target in the fourth field of view.

32. The apparatus according to claim 31, wherein the third emitting module is adjacent to the first emitting module, and the fourth emitting module is adjacent to the second emitting module.

33. The apparatus according to claim 31 or 32, wherein the first field of view and the third field of view are connected or partially overlap; and/or
the second field of view and the fourth field of view are connected or partially overlap; and/or
the first field of view and the second field of view are connected or partially overlap.

34. The apparatus according to claim 33, wherein a light spot of the first light beam and a light spot of the third light beam in an overlapping field of view are staggered; and/or
a light spot of the second light beam and a light spot of the fourth light beam in an overlapping field of view are staggered; and/or
a light spot of the first light beam and a light spot of the second light beam in an overlapping field of view are staggered.

35. The apparatus according to any one of claims 31 to 34, wherein the detection apparatus further comprises the third receiving module and the fourth receiving module;
the third receiving module is configured to receive the third echo signal; and
the fourth receiving module is configured to receive the fourth echo signal.

36. A terminal device, comprising a control apparatus and the detection apparatus according to any one of claims 1 to 35, wherein the control apparatus is configured to control the detection apparatus to perform detection.

37. A detection apparatus, comprising a first scanning module, a second scanning module, a first emitting module, and a second emitting module, wherein the first scanning module comprises a first reflective surface, and the second scanning module comprises a second reflective surface;
the first emitting module is configured to emit a first light beam;
the second emitting module is configured to emit a second light beam;
the first reflective surface of the first scanning module is configured to: reflect the first light beam to form a first field of view, and reflect a first echo signal to a first receiving module, wherein the first echo signal is obtained by reflecting the first light beam by a target in the first field of view;
the second reflective surface of the second scanning module is configured to: reflect the second light beam to form a second field of view, and reflect a second echo signal to a second receiving module, wherein the second echo signal is obtained by reflecting the second light beam by a target in the second field of view; and
an angle between a first edge of the first field of view and a first frame of a fastening mechanical part is less than a first threshold, and/or an angle between a second edge of the second field of view and a second frame of the fastening mechanical part is less than a second threshold, and the fastening mechanical part is configured to fasten the detection apparatus.

38. The apparatus according to claim 37, wherein the angle between the first edge of the first field of view and the first frame of the fastening mechanical part is equal to 0°, and/or the angle between the second edge of the second field of view and the second frame of the fastening mechanical part is equal to 0°.

39. The apparatus according to claim 37 or 38, wherein the first reflective surface and the second reflective surface are disposed opposite to each other, and an included angle between the first reflective surface and the second reflective surface is greater than 0° and less than 180°.
